# FASCICULE DE BREVET EUROPEEN

(11) **EP 3 727 920 B1**
(45) Date de publication et mention de la délivrance du brevet: **27.04.2022**
(21) Numéro de dépôt: 18830232.7
(22) Date de dépôt: 18.12.2018
(51) Int. Cl.: B60K 11/08

(54) **SYSTÈME AÉRODYNAMIQUE ACTIF DÉFORMABLE**
VERFORMBARES AKTIVES AERODYNAMISCHES SYSTEM
DEFORMABLE ACTIVE AERODYNAMIC SYSTEM

(30) Priorité: 18.12.2017 FR 1762309
(43) Date de publication de la demande: 28.10.2020
(73) Titulaire: Compagnie Plastic Omnium, 69007 Lyon (FR)
(72) Inventeur: GILLARD, Laurent, Beverly Hills, Michigan 48025 (US); PARRA, Stéphane, 69120 Vaulx-en-Velin (FR)
(74) Mandataire: LLR
(86) Numéro de dépôt international: PCT/EP2018/085543
(87) Numéro de publication internationale: WO 2019/121714

(56) Documents cités:
- DE-A1-102011 078 691
- DE-U1-202013 007 805
- FR-A1- 3 046 757
- GB-A- 2 512 071
- JP-A- 2013 199 178

## Description

La présente invention concerne le domaine des véhicules automobiles, et notamment les systèmes aérodynamiques actifs des véhicules automobiles. L'invention traite plus précisément de la robustesse de tels systèmes aérodynamiques actifs.

Avec l'avènement de l'informatique et des systèmes automatisés, les systèmes actifs de véhicules, et plus spécifiquement les systèmes aérodynamiques actifs, sont aujourd'hui très répandus et utilisés dans l'industrie automobile. On peut par exemple citer les volets situés au niveau de la grille d'entrée d'air à l'avant du véhicule et permettant le passage d'air jusqu'à un échangeur thermique situé derrière la grille d'entrée d'air.

Il est connu des systèmes aérodynamiques actifs dans lesquels un actionneur commande la mise en mouvement d'éléments mobiles, par exemple les volets. Les éléments mobiles sont fixés à une structure de support, par exemple un cadre dans le cas des volets d'entrée d'air. L'actionneur de ces systèmes est relié à une même unité de commande électronique, elle-même présente dans le véhicule, qui centralise les données et gère les mises en mouvements des éléments mobiles des systèmes mentionnés.

Pour des raisons liées aux performances aérodynamiques du véhicule, il est préférable qu'une grille à volets actifs *(active grille shutter* en anglais) soit placée le plus près possible de l'extrémité avant du véhicule, par exemple au niveau du pare-chocs avant du véhicule automobile, plutôt que de placer les volets sur le module de la partie avant du véhicule (comme c'est par exemple le cas dans la demande US 2017/0248066).

Cependant, ce positionnement expose la grille à volets actifs aux chocs que subirait le véhicule. S'agissant d'un système comprenant des parties mobiles, des chocs peuvent avoir pour conséquence un mauvais fonctionnement des volets, voire une absence de fonctionnement. Dans le cas d'une grille à volets actifs, les volets s'ouvrent afin de permettre le passage d'un flux d'air jusqu'à un échangeur thermique situé derrière la grille. Le mauvais fonctionnement ou le non fonctionnement des volets peut dès lors avoir de graves conséquences (mauvais fonctionnement du système de refroidissement moteur du véhicule entre autres). Certaines normes en matière de tests de collision à faible vitesse, comme par exemple aux États-Unis (US part 581) ou en Europe (ECE 42), imposent en général que les systèmes liés au pare-chocs, comme par exemple les systèmes liés au refroidissement moteur, soient en état de fonctionnement après impact.

D'autres exemples de grilles à volets actifs de véhicule automobile sont aussi connus des documents DE 10 2011 078691 A1 et GB 2 512 071 A.

L'invention a pour but de remédier à l'inconvénient précité en fournissant un système aérodynamique actif capable d'encaisser des chocs sans que cela n'altère son fonctionnement.

L'invention a pour objet une grille à volets actifs de véhicule automobile comprenant :
- des éléments mobiles, et
- une structure de support recevant les éléments mobiles,
la structure de support comprenant plusieurs parties reliées entre elles et recevant chacune une série d'éléments mobiles, la grille à volets actifs comprenant au moins un actionneur apte à mettre en mouvement les éléments mobiles relié à au moins un élément mobile, l'élément mobile relié à l'actionneur étant relié à l'actionneur par l'intermédiaire d'une liaison apte à lui conférer au moins un degré de liberté par rapport à l'actionneur, caractérisée en ce que les parties sont aptes à pivoter les unes par rapport aux autres.

Ainsi, la grille à volets actifs comprend plusieurs parties, comprenant chacune leurs propres éléments mobiles, qui peuvent bouger les unes par rapport aux autres sans pour autant altérer le fonctionnement du système. Cela permet donc à la grille de subir un choc, notamment à faible vitesse, sans pour autant que cela est une conséquence sur son fonctionnement car la possibilité de déformation de la structure de support permet une réorientation des parties la composant les unes par rapport aux autres sans affecter les éléments mobiles portés par ces différentes parties étant donné que ces dernières ne sont pas déformées.

En cas de nécessité de remplacement du pare-chocs suite à un choc, il est possible de récupérer la grille à volets actifs si cette dernière est en état de marche, ce qui limite le nombre de pièces à changer. Il sera le cas échéant seulement nécessaire de replacer les différentes parties de la grille dans la bonne orientation les unes par rapport aux autres (aucune casse des différentes liaisons, etc.). En cas d'endommagement d'un des éléments de la grille (fissure au niveau d'une partie composant la structure de support, etc.), il est possible de procéder seulement au remplacement de cette partie et non au remplacement de l'ensemble de la grille à volets actifs.

Enfin, la réalisation de la grille à volets actifs en plusieurs parties limite la taille des outils d'injection et les coûts de fabrication.

La grille à volets actifs selon l'invention peut comprendre une ou plusieurs des caractéristiques suivantes :
- les parties composant la structure de support sont aptes à pivoter autour d'un axe vertical lorsque le système aérodynamique actif est monté sur un véhicule automobile ;
- le nombre de parties est égal à deux parties ;
- l'élément mobile relié à l'actionneur a plusieurs degrés de liberté par rapport à l'actionneur, degrés de liberté comprenant une rotation autour d'un axe parallèle à un axe de rotation des parties les unes par rapport aux autres et une rotation autour d'un axe perpendiculaire à l'axe de rotation des parties les unes par rapport aux autres ;
- la liaison entre l'élément mobile relié à l'actionneur et l'actionneur est une liaison de type rotule à doigt ;
- l'actionneur est situé au centre de la grille à volets actifs ;
- l'actionneur est décentré par rapport à la structure de support ;
- la grille à volets actifs comprend des moyens de fixation à une pièce de véhicule automobile ;
- la structure de support est réalisée à partir d'un matériau choisi parmi le polypropylène comprenant entre 30 et 40 % en masse de fibres de verre par rapport à la masse totale de la structure de support ou les polyamides comprenant 20 % de fibres en masse de verre par rapport à la masse totale de la structure de support ; et

L'invention concerne également une pièce de véhicule automobile comprenant une grille à volets actifs selon l'invention.

On peut prévoir que la pièce de véhicule automobile est un pare-chocs de véhicule automobile.

Nous allons maintenant présenter un mode de réalisation de l'invention donné à titre d'exemple non limitatif et à l'appui des figures annexées sur lesquelles :
- la figure 1 est une représentation schématique d'un système aérodynamique actif de véhicule automobile selon l'invention, et
- la figure 2 est un schéma représentant les liaisons et le fonctionnement du système de la figure 1.

Par la suite, les termes d'orientation tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles.

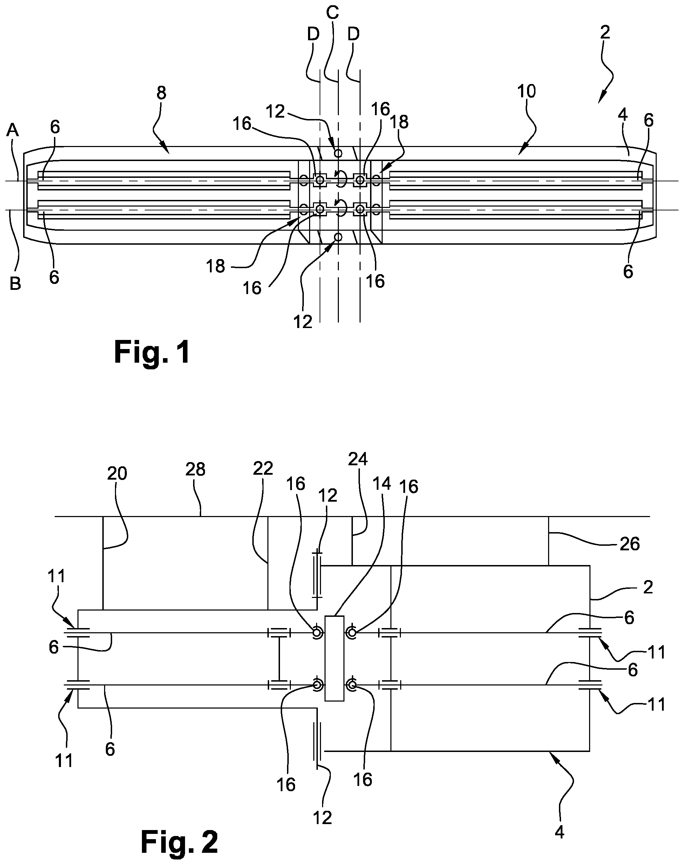

La figure 1 représente un système aérodynamique actif 2 de véhicule automobile, une grille à volets actifs dans l'exemple illustré, c'est-à-dire une grille comprenant des volets mobiles afin de permettre ou d'interdire le passage de flux d'air au niveau de la zone avant du véhicule, plus particulièrement au niveau de l'échangeur thermique du véhicule. Ce système comprend une structure de support 4 agencée de manière à accueillir une pluralité d'éléments mobiles 6 (quatre sur les figures, ce nombre pouvant bien évidemment varier). Ces derniers sont mobiles en rotation autour de leurs axes longitudinaux respectifs A et B. On entend par axe longitudinal une ligne fictive prise dans le sens de la longueur d'un élément mobile 6, passant par le centre de ce dernier et autour de laquelle un mouvement de rotation de l'élément mobile peut s'effectuer. Ces axes peuvent être parallèles à un axe transversal Y d'un véhicule automobile lorsque le système aérodynamique actif 2 est monté sur un véhicule automobile. On note ici que les deux éléments mobiles 6 supérieurs d'une part et les deux éléments mobiles 6 inférieurs d'autre part ont des axes longitudinaux confondus. Cela n'est pas toujours le cas. Les éléments mobiles 6 peuvent occuper une position de fermeture dans laquelle le système aérodynamique actif empêche le passage d'un flux d'air à travers lui et au moins une position d'ouverture dans laquelle le système aérodynamique actif permet le passage d'un flux d'air à travers lui. On peut envisager plusieurs positions d'ouverture permettant le passage d'un flux d'air plus ou moins important.

La structure de support 4 peut être réalisée à partir d'un matériau choisi parmi le polypropylène comprenant entre 30 et 40 % en masse de fibres de verre par rapport à la masse totale de la structure de support 4 ou les polyamides comprenant 20 % de fibres en masse de verre par rapport à la masse totale de la structure de support 4 et est composée de deux parties 8 et 10. Il est néanmoins possible que le nombre de parties soit supérieur à deux. Les deux parties 8 et 10 portent chacune la moitié les éléments mobiles 6. Au moins une extrémité de chaque élément mobile est fixé à une des parties 8 et 10 par l'intermédiaire de liaisons 11 permettant la rotation des éléments mobiles 6 autour de leurs axes longitudinaux respectifs. Les parties 8 et 10 sont symétriques par rapport à un axe C, cet axe pouvant être parallèle à un axe vertical Z du véhicule lorsque le système aérodynamique actif 2 est monté sur un véhicule. On peut dans ce cas définir la partie 8 comme étant la partie « gauche » et la partie 10 comme étant la partie « droite ». Il est néanmoins possible d'envisager que les deux parties soient symétriques par rapport à un axe parallèle aux axes A et B et passant par le centre du système aérodynamique actif 2. Il peut s'agir d'un axe parallèle à un axe transversal Y du lorsque le système aérodynamique actif 2 est monté sur un véhicule. On peut dans ce cas définir la première partie comme étant la partie « supérieure » et la seconde partie comme étant la partie « inférieure ».

Il est possible de combiner la notion de symétrie avec le nombre de parties, par exemple avoir quatre parties dites « inférieure gauche », « inférieure droite », « supérieure gauche » et « supérieure droite », les différentes parties étant symétriques les unes par rapport aux autres par rapport à différents axes de symétrie (les deux axes cités auparavant et un troisième perpendiculaire aux deux premiers).

Il est également possible qu'au moins une des parties 8 et 10 illustrées sur la figure 1 soit divisée en plusieurs parties.

Les différentes parties, ici les parties 8 et 10, sont fixées les unes par rapport aux autres par l'intermédiaire de liaisons 12 leur conférant la capacité de pivoter les unes par rapport aux autres tout en étant fixe par rapport à une pièce de véhicule automobile les portant. Il peut par exemple s'agir d'une liaison de type pivot ou de toute autre liaison permettant cette rotation. Dans l'exemple illustré, les parties 8 et 10 sont aptes à pivoter autour de l'axe C, c'est-à-dire autour d'un axe vertical Z lorsque le système aérodynamique actif 2 est monté sur un véhicule. Le ou les axes de rotation peuvent varier en fonction du nombre et de la disposition des différentes parties les unes par rapport aux autres comme décrit plus haut. Il peut s'agir par exemple d'un axe de rotation parallèle à un axe transversal Y lorsque le système aérodynamique actif 2 est monté sur un véhicule quand la structure de support est composée d'une partie supérieure et d'une partie inférieure. Il est également possible d'avoir quatre parties, comme décrit plus haut, avec les deux axes de rotation précités.

Les éléments mobiles 6 sont mis en mouvement par l'intermédiaire d'un actionneur 14 lui-même relié à une unité de contrôle électronique. Il peut par exemple s'agir d'un moteur à sortie directe en couple et angle relié à au moins un élément mobile 6 d'une série d'éléments mobiles 6 ou de tout autre actionneur permettant la mise en mouvement de ces derniers comme décrit plus haut.

Dans l'exemple représenté sur la figure 2, l'actionneur 14 est positionné au centre du système aérodynamique actif 2, par exemple dans un logement obtenu par la réunion des parties 8 et 10, et est relié à l'ensemble des éléments mobiles 6.

Les liaisons 16 de l'actionneur 14 aux éléments mobiles 6 sont de nature à permettre une rotation des éléments mobiles 6 autour de leurs axes longitudinaux respectifs mais également une rotation autour d'axes de rotation D parallèle à l'axe de rotation C et ce afin de permettre aux éléments mobiles de pivoter en même temps que les parties 8 et 10 les accueillant. Il peut par exemple s'agir d'une liaison de type rotule, plus particulièrement d'une liaison de type rotule à doigt, ou de tout autre type de liaison autorisant les mouvements décrits ci-dessus.

On peut par exemple citer la liaison des éléments mobiles 6 à l'actionneur 14 par une pièce intermédiaire comprenant deux portions rigides reliées l'une à l'autre par un élément sphérique, plus précisément une liaison de type genouillère. En étant placé dans une position optimale, la genouillère permet le mouvement des éléments mobiles 6 par rapport à l'axe D tout en garantissant une rotation des éléments mobiles autour de leurs axes longitudinaux respectifs. Une liaison de ce type est également apte à assurer une rotation des éléments mobiles 6 autour d'un axe parallèle à un axe longitudinal X du véhicule lorsque le système aérodynamique actif est monté sur un véhicule, par exemple en cas de soulèvement d'une des parties 8 et 10.

Dans une variante de la solution non illustrée sur les figures, il est possible de décentrer l'actionneur 14 pour le placer à une extrémité du système aérodynamique actif 2 afin de relier, directement ou indirectement, l'actionneur 14 à un ou plusieurs éléments mobiles 6 d'une seule série d'éléments mobiles 6. On peut alors prévoir une liaison entre les éléments mobiles 6 des différentes séries d'éléments mobiles 6, liaison pouvant avoir lieu au centre du système aérodynamique actif 2, permettant les différents mouvements décrits ci-dessus (rotations autour des axes longitudinaux A et B et autour d'un axe parallèle à l'axe de rotation C des parties 8 et 10 entre elles). Il peut par exemple s'agir des liaisons décrites ci-dessus (rotule à doigt, genouillère, etc.). Cette liaison a pour but de transmettre les efforts de la série d'éléments mobiles 6 reliée à l'actionneur 14 aux autres séries d'éléments mobiles 6 afin de pouvoir les mettre en rotation autour de leurs axes longitudinaux respectifs. Si l'actionneur 14 est relié à un seul élément mobile 6, on prévoit également une liaison entre les différents éléments mobiles 6 de la série à laquelle ce dernier appartient.

Dans une autre variante, il est possible de ne pas relier, directement ou indirectement, les différentes séries d'éléments mobiles 6 entre eux. Il est possible dans ce cas de relier les extrémités des éléments mobiles 6 initialement reliées à l'actionneur 14 ou entre elles aux parois 18, qui dans ce cas sont pleines, par l'intermédiaire de liaisons permettant une rotation des éléments mobiles 6 autour de leurs axes longitudinaux respectifs. Dans ce cas, un actionneur 14 différent est affecté à chaque série d'éléments mobiles 6. Dans ce cas de figure, les éléments mobiles 6 ne sont pas concernés par une rotation des parties 8 et 10 autour de l'axe de rotation C.

Le système aérodynamique actif 2 comprend des moyens 20, 22, 24 et 26 permettant la liaison du système aérodynamique actif 2 à une pièce de véhicule automobile 28, par exemple une grille de calandre. On prévoit de préférence des moyens de liaison réversibles afin de pouvoir détacher le système aérodynamique actif 2 si besoin. La fixation peut dès lors être un clipsage, un vissage, etc.

La pièce de véhicule sur laquelle est monté le système aérodynamique actif 2 peut être un pare-chocs avant de véhicule automobile. En cas de choc et déformation de la peau de pare-chocs (composé de polypropylène relativement élastique), les différents degrés de liberté des parties 8 et 10 et des éléments mobiles 6 permettent un mouvement des parties 8 et 10 suivant les déformations du pare-chocs. En effet, il est possible que la partie 8 soit amenée à pivoter autour de l'axe de rotation C après un choc. Les liaisons, par exemple de type pivot, reliant les parties 8 et 10 et les liaisons, par exemple de type rotule à doigt, entre l'actionneur 14 et les éléments mobiles 6, permettent cette rotation tout en assurant une continuité du fonctionnement du système aérodynamique actif 2. On notera qu'aucun élément mobile 6 n'a un axe longitudinal confondu avec un autre élément mobile 6 après rotation de la partie 8, les deux parties 8 et 10 s'étendant dans des plans différents. De plus, en cas de chocs ayant endommagé le système aérodynamique actif 2, l'avantage d'un système en plusieurs portions est de pouvoir ne remplacer que les portions atteintes tout en conservant le reste du système.

L'invention n'est pas limitée aux modes de réalisation présentés et d'autres modes de réalisation apparaîtront clairement à l'homme du métier.

Il est notamment possible de faire varier le nombre de parties constituant la structure de support, leur disposition les unes par rapport aux autres et les rotations possibles des différentes parties entre elles.

### Liste des références numériques

2 : système aérodynamique actif
4 : structure de support
6 : éléments mobiles
8, 10 : parties de la structure de support
11 : liaisons entre les éléments mobiles et les parties
12 : liaisons entre les parties
14 : actionneur
16 : liaisons entre l'actionneur et les éléments mobiles
18 : parois des parties
20, 22, 24, 26 : liaisons entre le système aérodynamique actif et une pièce de véhicule automobile
28 : pièce de véhicule automobile
A, B : axes longitudinaux des éléments mobiles
C : axe de rotation des parties
D : axe de rotation des éléments mobiles par rapport à l'actionneur

## Revendications

1. Grille à volets actifs (2) de véhicule automobile comprenant :
- des éléments mobiles (6), et
- une structure de support (4) recevant les éléments mobiles (6), la structure de support (4) comprenant plusieurs parties (8, 10) reliées entre elles et recevant chacune une série d'éléments mobiles (6), la grille à volets actifs (2) comprenant au moins un actionneur (14) apte à mettre en mouvement les éléments mobiles (6) relié à au moins un élément mobile (6), l'élément mobile (6) relié à l'actionneur (14) étant relié à l'actionneur (14) par l'intermédiaire d'une liaison (16) apte à lui conférer au moins un degré de liberté par rapport à l'actionneur (14), **caractérisée en ce que** les parties (8, 10) sont aptes à pivoter les unes par rapport aux autres.

2. Grille à volets actifs (2) selon la revendication 1, dans lequel les parties (8, 10) composant la structure de support (4) sont aptes à pivoter autour d'un axe (C) vertical lorsque la grille à volets actifs (2) est montée sur un véhicule automobile.

3. Grille à volets actifs (2) selon l'une quelconque des revendications précédentes, dans lequel le nombre de parties (8, 10) est égal à deux parties.

4. Grille à volets actifs (2) selon l'une quelconque des revendications précédentes, dans lequel l'élément mobile (6) relié à l'actionneur a plusieurs degrés de liberté par rapport à l'actionneur (14), degrés de liberté comprenant une rotation autour d'un axe (D) parallèle à un axe de rotation (C) des parties (8, 10) les unes par rapport aux autres et une rotation autour d'un axe (A, B) perpendiculaire à l'axe de rotation (C) des parties (8, 10) les unes par rapport aux autres.

5. Grille à volets actifs (2) selon l'une quelconque des revendications précédentes, dans lequel la liaison (16) entre l'élément mobile (6) relié à l'actionneur et l'actionneur (14) est une liaison de type rotule à doigt.

6. Grille à volets actifs (2) selon l'une quelconque des revendications précédentes, dans lequel l'actionneur (14) est situé au centre de la grille à volets actifs (2).

7. Grille à volets actifs (2) selon l'une quelconque des revendications 1 à 5, dans lequel l'actionneur est décentré par rapport à la structure de support (4).

8. Grille à volets actifs (2) selon l'une quelconque des revendications précédentes comprenant des moyens de fixation (20, 22, 24, 26) à une pièce (28) de véhicule automobile.

9. Grille à volets actifs (2) selon l'une quelconque des revendications précédentes, dans lequel la structure de support (4) est réalisée à partir d'un matériau choisi parmi le polypropylène comprenant entre 30 et 40 % en masse de fibres de verre par rapport à la masse totale de la structure de support (4) ou les polyamides comprenant 20 % de fibres en masse de verre par rapport à la masse totale de la structure de support (4).

10. Pièce de véhicule automobile (28) comprenant une grille à volets actifs (2) selon l'une quelconque des revendications précédentes.

11. Pièce de véhicule automobile (28) selon la revendication 10, la pièce (28) étant un pare-chocs de véhicule automobile.

## Patentansprüche

1. Gitter mit aktiven Klappen (2) eines Kraftfahrzeugs, aufweisend:
- bewegliche Elemente (6), und
- eine Trägerstruktur (4), die die beweglichen Elemente (6) aufnimmt,
wobei die Tragstruktur (4) mehrere Teile (8, 10) aufweist, die miteinander verbunden sind und jeweils eine Reihe von beweglichen Elementen (6) aufnehmen, wobei das Gitter mit aktiven Klappen (2) mindestens ein Stellglied (14) aufweist, das die beweglichen Elemente (6) in Bewegung setzen kann und mit mindestens einem beweglichen Element (6) verbunden ist, wobei das mit dem Stellglied (14) verbundene bewegliche Element (6) mit dem Stellglied (14) über eine Verbindung (16) verbunden ist, die eingerichtet ist, ihm mindestens einen Freiheitsgrad in Bezug auf das Stellglied (14) zu verleihen, **dadurch gekennzeichnet, dass** die Teile (8, 10) eingerichtet sind, sich relativ zueinander zu drehen.

2. Gitter mit aktiven Klappen (2) nach Anspruch 1, wobei die Teile (8, 10), aus denen die Tragstruktur (4) besteht, eingerichtet sind, um sich um eine vertikale Achse (C) zu drehen, wenn das Gitter mit aktiven Klappen (2) an einem Kraftfahrzeug angebracht ist.

3. Gitter mit aktiven Klappen (2) nach einem der vorhergehenden Ansprüche, wobei die Anzahl der Teile (8, 10) gleich zwei Teile ist.

4. Gitter mit aktiven Klappen (2) nach einem der vorhergehenden Ansprüche, wobei das mit dem Stellglied verbundene bewegliche Element (6) mehrere Freiheitsgrade in Bezug auf das Stellglied (14) hat, wobei die Freiheitsgrade eine Drehung um eine Achse (D) parallel zu einer Drehachse (C) der Teile (8, 10) relativ zueinander und eine Drehung um eine Achse (A, B) senkrecht zu der Drehachse (C) der Teile (8, 10) relativ zueinander aufweisen.

5. Gitter mit aktiven Klappen (2) nach einem der vorhergehenden Ansprüche, wobei die Verbindung (16) zwischen dem beweglichen Element (6), das mit dem Stellglied verbunden ist, und dem Stellglied (14) eine Kugelgelenk-Fingerverbindung ist.

6. Gitter mit aktiven Klappen (2) nach einem der vorhergehenden Ansprüche, wobei sich das Stellglied (14) in der Mitte des Gitters mit aktiven Klappen (2) befindet.

7. Gitter mit aktiven Klappen (2) nach einem der Ansprüche 1 bis 5, wobei das Stellglied in Bezug auf die Trägerstruktur (4) dezentriert ist.

8. Gitter mit aktiven Klappen (2) nach einem der vorhergehenden Ansprüche, das Mittel zur Befestigung (20, 22, 24, 26) an einem Teil (28) eines Kraftfahrzeugs aufweist.

9. Gitter mit aktiven Klappen (2) nach einem der vorhergehenden Ansprüche, wobei die Trägerstruktur (4) aus einem Material hergestellt ist, das aus Polypropylen mit 30 bis 40 Massenprozent Glasfasern, bezogen auf die Gesamtmasse der Trägerstruktur (4), oder aus Polyamiden mit Massenprozent Glasfasern, bezogen auf die Gesamtmasse der Trägerstruktur (4), ausgewählt ist.

10. Kraftfahrzeugteil (28) mit einem Gitter mit aktiven Klappen (2) nach einem der vorhergehenden Ansprüche.

11. Kraftfahrzeugteil (28) nach Anspruch 10, wobei das Teil (28) ein Stoßfänger eines Kraftfahrzeugs ist.

## Claims

1. Motor vehicle active shutter grid (2) comprising:
- moving parts (6), and
- a support structure (4) receiving the moving parts (6),
the support structure (4) comprising several parts (8, 10) linked to each other and each receiving a series of moving parts (6), the active shutter grid (2) comprising at least one actuator (14) capable of setting in motion the moving parts (6) linked to at least one moving element (6), the moving element (6) linked to the actuator (14) being linked to the actuator (14) by means of a link (16) capable of giving it at least one degree of freedom in relation to the actuator (14), **characterized in that** the parts (8, 10) are capable of rotating in relation to each other.

2. Active shutter grid (2) according to claim 1, wherein the parts (8, 10) composing the support structure (4) are suitable for rotating around a vertical axis (C) when the active shutter grid (2) is mounted on a motor vehicle.

3. Active shutter grid (2) according to any of the preceding claims, in which the number of parts (8, 10) is equal to two parts.

4. Active shutter grid (2) according to any one of the preceding claims, wherein the moving parts (6) linked to the actuator has several degrees of freedom with respect to the actuator (14), degrees of freedom comprising a rotation around an axis (D) parallel to an axis of rotation (C) of the parts (8, 10) relative to each other and a rotation around an axis (A, B) perpendicular to the axis of rotation (C) of the parts (8, 10) with respect to each other.

5. Active shutter grid (2) according to any one of the preceding claims, wherein the link (16) between the moving parts (6) linked to the actuator and the actuator (14) is a link of the finger ball joint type.

6. Active shutter grid (2) according to any one of the preceding claims, wherein the actuator (14) is located in the center of the active shutter grid (2).

7. Grid with active shutters (2) according to any one of claims 1 to 5, wherein the actuator is off-center with respect to the support structure (4).

8. Active shutter grid (2) according to any one of the preceding claims comprising attachment means (20, 22, 24, 26) to a part (28) of a motor vehicle.

9. Active shutter grid (2) according to any one of the preceding claims, wherein the support structure (4) is made from a material selected from polypropylene comprising between 30 and 40 % by mass of glass fibers relative to the total mass of the support structure (4) or polyamides comprising 20 % of fibers by mass of glass relative to the total mass of the support structure (4).

10. Motor vehicle part (28) comprising an active shutter grid (2) according to any of the preceding claims.

11. Motor vehicle part (28) according to claim 10, part (28) being a motor vehicle bumper.
